# EUROPEAN PATENT SPECIFICATION

(11) **EP 2 752 852 B1**
(45) Date of publication and mention of the grant of the patent: **07.03.2018**
(21) Application number: 14000017.5
(22) Date of filing: 03.01.2014
(51) Int. Cl.: G11B 27/034, G11B 27/34, H04N 5/77, G06F 3/0484, G06F 3/0488, H04M 1/725

(54) **Mobile terminal and controlling method for video editing**
Mobiles Endgerät und Steuerungsverfahren für Videoschnitt
Terminal mobile et procédé de contrôle pour édition vidéo

(30) Priority: 04.01.2013 KR 20130000968
(43) Date of publication of application: 09.07.2014
(73) Proprietor: LG Electronics, Inc., Seoul, 150-721 (KR)
(72) Inventor: Kwon, Yunmi, 153-801 Seoul (KR); Chang, Minkyoung, 153-801 Seoul (KR); Kwon, Arim, 153-801 Seoul (KR)
(74) Representative: Beyer, Andreas

(56) References cited:
- EP-A1- 2 637 172
- US-A1- 2011 229 110

## Description

### BACKGROUND OF THE INVENTION

### Field of the Invention

The present invention relates to a mobile terminal, and more particularly, to a mobile terminal and controlling method thereof. Although the present invention is suitable for a wide scope of applications, it is particularly suitable for facilitating a video editing.

### Discussion of the Related Art

Generally, terminals can be classified into mobile/portable terminals and stationary terminals. The mobile terminals can be further classified into handheld terminals and vehicle mounted terminals. As functions of the terminal are becoming diversified, the terminal is implemented as a multimedia player provided with composite functions such as photographing of photos or videos, playback of music or video files, game play, broadcast reception and the like for example.

In addition, because a user tends to now watch videos using their mobile terminal, there is a demand for a mobile terminal capable of editing the video conveniently.

EP 2 637 172 A1, which was published after the priority date of the instant application, discloses a video editing apparatus and method for guiding video feature information. A controller analyzes each frame of a video and determines, through a feature information determiner, sections of the video where the feature is detected. The controller then displays video data in a timeline on a video editing screen, with the video feature information marked according to the time at which they are detected. The controller marks information about a video section including video feature information which the user is interested in with a particular color in video editing.

US 2011/229110 A1 discloses a video editing device including an analysis element for analysing a video to obtain a feature of the video, a specifying element to specify the feature, and an identifying element for identifying a scene having the feature. A presenting element then presents scene information including start and ending time of the identified scene. The identified scenes are indicated in line with the presented video by indicating the time position of the scene.

### SUMMARY OF THE INVENTION

Accordingly, the present invention is directed to a mobile terminal and controlling method thereof that substantially obviate one or more problems due to limitations and disadvantages of the related art.

An object of the present invention is to provide a mobile terminal and controlling method thereof, by which a video editing is facilitated.

In particular, one object of the present invention is to provide a mobile terminal and controlling method thereof, by which a video can be edited using various attribute information of the video selectively.

Another object of the present invention is to provide a mobile terminal and controlling method thereof, by which a section of a video can be edited more efficiently.

A further object of the present invention is to provide a mobile terminal and controlling method thereof, by which editing related information can be created in the course of a video shooting.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:
FIG. 1 is a block diagram of a mobile terminal according to one embodiment of the present invention;
FIG. 2 is a front perspective diagram of a mobile terminal or a handheld terminal according to one embodiment of the present invention;
FIG. 3 is a front diagram of a mobile terminal according to one embodiment of the present invention to describe one operating state thereof;
FIG. 4 is a flowchart illustrating one example of a video editing method through visualization of attribute information according to one embodiment of the present invention;
FIG. 5 is a diagram illustrating one example of a process for visualizing attribute information through an editing mode in a mobile terminal according to one embodiment of the present invention;
FIG. 6 is a diagram illustrating another example of a process for visualizing attribute information through an editing mode in a mobile terminal according to one embodiment of the present invention;
FIG. 7 is a diagram illustrating one example of a video editing method using an icon region in a mobile terminal according to one embodiment of the present invention;
FIG. 8 is a diagram illustrating one example of a video editing method using a graph region in a mobile terminal according to one embodiment of the present invention;
FIG. 9 is a diagram illustrating one example of a video editing method according to another aspect of one embodiment of the present invention;
FIG. 10 is a diagram illustrating one example of a method of editing a plurality of editing target videos according to another aspect of one embodiment of the present invention;
FIG. 11 is a diagram illustrating one example of a method of determining whether a selected attribute condition is met per frame in a mobile terminal according to one embodiment of the present invention;
FIG. 12 is a diagram illustrating one example of a section editing method according to another aspect of one embodiment of the present invention;
FIG. 13 is a diagram illustrating one example of a method of editing a video partially in the course of a video shooting according to another aspect of the present invention;
FIG. 14 is a diagram illustrating one example of a method of setting a tag information for a video in the course of a video shooting in a mobile terminal according to another aspect of the present invention;
FIG. 15 is a diagram illustrating another example of a method of setting a tag information for a video in the course of a video shooting in a mobile terminal according to another aspect of the present invention;
FIG. 16 is a diagram illustrating one example of a process for selecting an automatic tag creation reference in a mobile terminal according to another aspect of another embodiment of the present invention; and
FIG. 17 is a diagram illustrating one example of a method of pausing and resuming a video shooting in a mobile terminal according to a further aspect of another embodiment of the present invention.

### DETAILED DESCRIPTION OF THE INVENTION

In the following detailed description, reference is made to the accompanying drawing figures which form a part hereof, and which show by way of illustration specific embodiments of the invention. It is to be understood by those of ordinary skill in this technological field that other embodiments may be utilized, and structural, electrical, as well as procedural changes may be made without departing from the scope of the present invention. Wherever possible, the same reference numbers will be used throughout the drawings to refer to the same or similar parts.

As used herein, the suffixes 'module', 'unit' and 'part' are used to denote elements in order to facilitate the disclosure only. Therefore, significant meanings or roles are not given to the suffixes themselves, and it is understood that the suffixes 'module', 'unit' and 'part' can be used together or interchangeably.

Features of embodiments of the present invention are applicable to various types of terminals. Examples of such terminals include mobile terminals, such as mobile phones, user equipment, smart phones, mobile computers, digital broadcast terminals, personal digital assistants, portable multimedia players (PMP) and navigators. However, by way of non-limiting example only, further description will be with regard to a mobile terminal 100, and it should be noted that such teachings may apply equally to other types of terminals such as digital TV, desktop computers and so on.

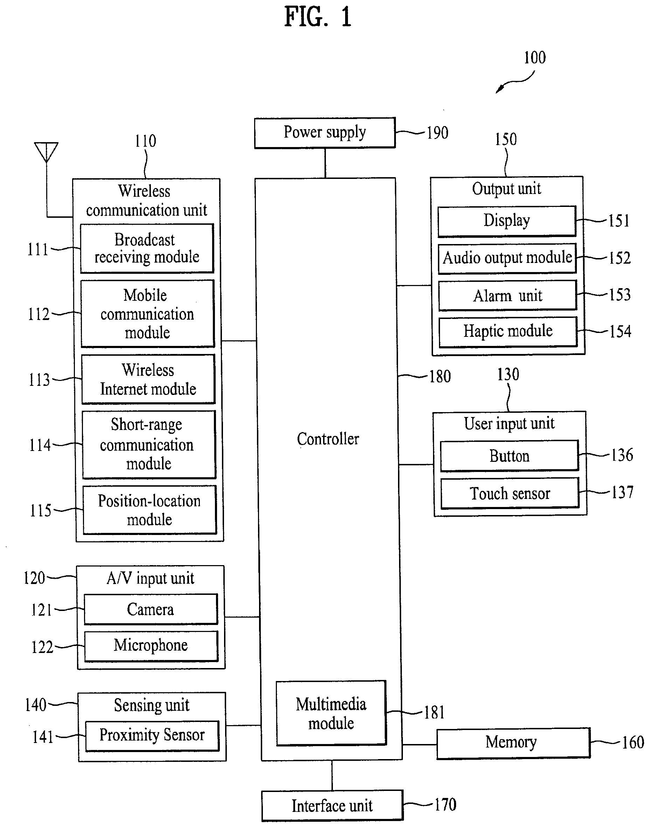

FIG. 1 is a block diagram of a mobile terminal 100 in accordance with an embodiment of the present invention. With reference to FIG. 1, the mobile terminal 100 includes a wireless communication unit 110, an A/V (audio/video) input unit 120, a user input unit 130, a sensing unit 140, an output unit 150, a memory 160, an interface unit 170, a controller 180, and a power supply unit 190. FIG. 1 shows the mobile terminal 100 having various components, but implementing all of the illustrated components is not a requirement. More or fewer components may be implemented according to various embodiments.

The wireless communication unit 110 typically includes one or more components which permit wireless communication between the mobile terminal 100 and a wireless communication system or network within which the mobile terminal 100 is located. For instance, the wireless communication unit 110 can include a broadcast receiving module 111, a mobile communication module 112, a wireless Internet module 113, a short-range communication module 114, and a position-location module 115.

The broadcast receiving module 111 receives a broadcast signal and/or broadcast associated information from an external broadcast managing server via a broadcast channel. The broadcast channel may include a satellite channel and a terrestrial channel. At least two broadcast receiving modules 111 can be provided in the mobile terminal 100 to facilitate simultaneous reception of at least two broadcast channels or broadcast channel switching.

The broadcast managing server is generally a server which generates and transmits a broadcast signal and/or broadcast associated information or a server which is provided with a previously generated broadcast signal and/or broadcast associated information and then transmits the provided signal or information to a terminal. The broadcast signal may be implemented as a TV broadcast signal, a radio broadcast signal, and/or a data broadcast signal, among other signals. If desired, the broadcast signal may further include a broadcast signal combined with a TV or radio broadcast signal.

The broadcast associated information includes information associated with a broadcast channel, a broadcast program, or a broadcast service provider. Furthermore, the broadcast associated information can be provided via a mobile communication network. In this instance, the broadcast associated information can be received by the mobile communication module 112.

The broadcast associated information can be implemented in various forms. For instance, broadcast associated information may include an electronic program guide (EPG) of digital multimedia broadcasting (DMB) and an electronic service guide (ESG) of digital video broadcast-handheld (DVB-H).

The broadcast receiving module 111 may be configured to receive broadcast signals transmitted from various types of broadcast systems. By nonlimiting example, such broadcasting systems may include digital multimedia broadcasting-terrestrial (DMB-T), digital multimedia broadcasting-satellite (DMB-S), digital video broadcast-handheld (DVB-H), digital video broadcast-convergence of broadcasting and mobile services (DVB-CBMS), Open Mobile Alliance Broadcast (OMA-BCAST), the data broadcasting system known as media forward link only (MediaFLO™) and integrated services digital broadcast-terrestrial (ISDB-T). Optionally, the broadcast receiving module 111 can be configured to be suitable for other broadcasting systems as well as the above-noted digital broadcasting systems.

The broadcast signal and/or broadcast associated information received by the broadcast receiving module 111 may be stored in a suitable device, such as the memory 160.

The mobile communication module 112 transmits/receives wireless signals to/from one or more network entities (e.g., a base station, an external terminal, and/or a server) via a mobile network such as GSM (Global System for Mobile communications), CDMA (Code Division Multiple Access), or WCDMA (Wideband CDMA). Such wireless signals may carry audio, video, and data according to text/multimedia messages.

The wireless Internet module 113 supports Internet access for the mobile terminal 100. This module may be internally or externally coupled to the mobile terminal 100. The wireless Internet technology can include WLAN (Wireless LAN), Wi-Fi, Wibro™ (Wireless broadband), Wimax™ (World Interoperability for Microwave Access), HSDPA (High Speed Downlink Packet Access), GSM, CDMA, WCDMA, or LTE (Long Term Evolution) .

Wireless Internet access by Wibro™, HSPDA, GSM, CDMA, WCDMA, or LTE is achieved via a mobile communication network. In this regard, the wireless Internet module 113 may be considered as being a kind of the mobile communication module 112 to perform the wireless Internet access via the mobile communication network.

The short-range communication module 114 facilitates relatively short-range communications. Suitable technologies for implementing this module include radio frequency identification (RFID), infrared data association (IrDA), ultra-wideband (UWB), as well as the networking technologies commonly referred to as Bluetooth™ and ZigBee™, to name a few.

The position-location module 115 identifies or otherwise obtains the location of the mobile terminal 100. According to one embodiment, this module may be implemented with a global positioning system (GPS) module. The GPS module 115 can precisely calculate current 3-dimensional position information based on at least longitude, latitude or altitude and direction (or orientation) by calculating distance information and precise time information from at least three satellites and then applying triangulation to the calculated information. Location information and time information are calculated using three satellites, and errors of the calculated location position and time information are then amended (or corrected) using another satellite. In addition, the GPS module 115 can calculate speed information by continuously calculating a real-time current location.

With continued reference to FIG. 1, the audio/video (A/V) input unit 120 is configured to provide audio or video signal input to the mobile terminal 100. As shown, the A/V input unit 120 includes a camera 121 and a microphone 122. The camera 121 receives and processes image frames of still pictures or video, which are obtained by an image sensor in a video call mode or a photographing mode. Furthermore, the processed image frames can be displayed on the display 151.

The image frames processed by the camera 121 can be stored in the memory 160 or can be transmitted to an external recipient via the wireless communication unit 110. Optionally, at least two cameras 121 can be provided in the mobile terminal 100 according to the environment of usage.

The microphone 122 receives an external audio signal while the portable device is in a particular mode, such as phone call mode, recording mode and voice recognition. This audio signal is processed and converted into electronic audio data. The processed audio data is transformed into a format transmittable to a mobile communication base station via the mobile communication module 112 in a call mode. The microphone 122 typically includes assorted noise removing algorithms to remove noise generated in the course of receiving the external audio signal.

The user input unit 130 generates input data responsive to user manipulation of an associated input device or devices. Examples of such devices include a keypad, a dome switch, a touchpad (e.g., static pressure/capacitance), a jog wheel, and a jog switch. FIG. 1 also illustrates the user input unit 130 can include a button 136 (hard or soft button) and a touch sensor 137.

The sensing unit 140 provides sensing signals for controlling operations of the mobile terminal 100 using status measurements of various aspects of the mobile terminal. For instance, the sensing unit 140 may detect an open/closed status of the mobile terminal 100, the relative positioning of components (e.g., a display and keypad) of the mobile terminal 100, a change of position (or location) of the mobile terminal 100 or a component of the mobile terminal 100, a presence or absence of user contact with the mobile terminal 100, and an orientation or acceleration/deceleration of the mobile terminal 100.

As an example, a mobile terminal 100 configured as a slide-type mobile terminal is considered. In this configuration, the sensing unit 140 may sense whether a sliding portion of the mobile terminal is open or closed. According to other examples, the sensing unit 140 senses the presence or absence of power provided by the power supply unit 190, and the presence or absence of a coupling or other connection between the interface unit 170 and an external device. According to one embodiment, the sensing unit 140 can include a proximity sensor 141.

The output unit 150 generates output relevant to the senses of sight, hearing, and touch. Furthermore, the output unit 150 includes the display 151, an audio output module 152, an alarm unit 153, a haptic module 154, and a projector module 155.

The display 151 is typically implemented to visually display (output) information associated with the mobile terminal 100. For instance, if the mobile terminal is operating in a phone call mode, the display will generally provide a user interface (UI) or graphical user interface (GUI) which includes information associated with placing, conducting, and terminating a phone call. As another example, if the mobile terminal 100 is in a video call mode or a photographing mode, the display 151 may additionally or alternatively display images which are associated with these modes, the UI or the GUI.

The display module 151 may be implemented using known display technologies. These technologies include, for example, a liquid crystal display (LCD), a thin film transistor-liquid crystal display (TFT-LCD), an organic light-emitting diode display (OLED), a flexible display and a three-dimensional display. The mobile terminal 100 may include one or more of such displays.

Some of the displays can be implemented in a transparent or optical transmittive type, i.e., a transparent display. A representative example of the transparent display is the TOLED (transparent OLED). A rear configuration of the display 151 can be implemented as the optical transmittive type as well. In this configuration, a user may be able to see an object located at the rear of a terminal body on a portion of the display 151 of the terminal body.

At least two displays 151 can be provided in the mobile terminal 100 in accordance with one embodiment of the mobile terminal 100. For instance, a plurality of displays can be arranged to be spaced apart from each other or to form a single body on a single face of the mobile terminal 100. Alternatively, a plurality of displays can be arranged on different faces of the mobile terminal 100.

If the display 151 and a sensor for detecting a touch action (hereinafter called 'touch sensor') are configured as a mutual layer structure (hereinafter called 'touchscreen'), the display 151 is usable as an input device as well as an output device. In this instance, the touch sensor can be configured as a touch film, a touch sheet, or a touchpad.

The touch sensor can be configured to convert pressure applied to a specific portion of the display 151 or a variation of capacitance generated from a specific portion of the display 151 to an electronic input signal. Moreover, the touch sensor is configurable to detect pressure of a touch as well as a touched position or size.

If a touch input is made to the touch sensor, a signal(s) corresponding to the touch input is transferred to a touch controller. The touch controller processes the signal(s) and then transfers the processed signal(s) to the controller 180. Therefore, the controller 180 is made aware when a prescribed portion of the display 151 is touched.

Referring to FIG. 1, a proximity sensor 141 can be provided at an internal area of the mobile terminal 100 enclosed by the touchscreen or around the touchscreen. The proximity sensor is a sensor that detects a presence or non-presence of an object approaching a prescribed detecting surface or an object existing (or located) around the proximity sensor using an electromagnetic field strength or infrared ray without mechanical contact. Hence, the proximity sensor 141 is more durable than a contact type sensor and also has utility broader than the contact type sensor.

The proximity sensor 141 can include one of a transmittive photoelectric sensor, a direct reflective photoelectric sensor, a mirror reflective photoelectric sensor, a radio frequency oscillation proximity sensor, an electrostatic capacity proximity sensor, a magnetic proximity sensor, and an infrared proximity sensor. If the touchscreen includes the electrostatic capacity proximity sensor, it is configured to detect the proximity of a pointer using a variation of an electric field according to the proximity of the pointer. In this configuration, the touchscreen (touch sensor) can be considered as the proximity sensor.

For clarity and convenience of explanation, an action for enabling the pointer approaching the touchscreen to be recognized as placed on the touchscreen may be named 'proximity touch' and an action of enabling the pointer to actually come into contact with the touchscreen may be named 'contact touch'. In addition, a position, at which the proximity touch is made to the touchscreen using the pointer, may mean a position of the pointer vertically corresponding to the touchscreen when the pointer makes the proximity touch.

The proximity sensor detects a proximity touch and a proximity touch pattern (e.g., a proximity touch distance, a proximity touch duration, a proximity touch position, a proximity touch shift state). Information corresponding to the detected proximity touch action and the detected proximity touch pattern can be output to the touchscreen.

The audio output module 152 functions in various modes including a call-receiving mode, a call-placing mode, a recording mode, a voice recognition mode, and a broadcast reception mode to output audio data which is received from the wireless communication unit 110 or is stored in the memory 160. During operation, the audio output module 152 outputs audio relating to a particular function (e.g., call received, message received). The audio output module 152 may be implemented using one or more speakers, buzzers, other audio producing devices, and combinations of these devices.

The alarm unit 153 outputs a signal for announcing the occurrence of a particular event associated with the mobile terminal 100. Typical events include a call received, a message received and a touch input received. The alarm unit 153 can output a signal for announcing the event occurrence by way of vibration as well as video or audio signal. The video or audio signal can be output via the display 151 or the audio output module 152. Hence, the display 151 or the audio output module 152 can be regarded as a part of the alarm unit 153.

The haptic module 154 generates various tactile effects that can be sensed by a user. Vibration is a representative one of the tactile effects generated by the haptic module 154. The strength and pattern of the vibration generated by the haptic module 154 are controllable. For instance, different vibrations can be output in a manner of being synthesized together or can be output in sequence.

The haptic module 154 can generate various tactile effects as well as the vibration. For instance, the haptic module 154 may generate an effect attributed to the arrangement of pins vertically moving against a contact skin surface, an effect attributed to the injection/suction power of air though an injection/suction hole, an effect attributed to the skim over a skin surface, an effect attributed to a contact with an electrode, an effect attributed to an electrostatic force, and an effect attributed to the representation of a hot/cold sense using an endothermic or exothermic device.

The haptic module 154 can be implemented to enable a user to sense the tactile effect through a muscle sense of a finger or an arm as well as to transfer the tactile effect through direct contact. Optionally, at least two haptic modules 154 can be provided in the mobile terminal 100 in accordance with an embodiment of the mobile terminal 100.

The memory 160 is generally used to store various types of data to support the processing, control, and storage requirements of the mobile terminal 100. Examples of such data include program instructions for applications operating on the mobile terminal 100, contact data, phonebook data, messages, audio, still pictures (or photo), and moving pictures. Furthermore, a recent use history or a cumulative use frequency of each data (e.g., use frequency for each phonebook, each message or each multimedia file) can be stored in the memory 160.

Moreover, data for various patterns of vibration and/or sound output in response to a touch input to the touchscreen can be stored in the memory 160.

The memory 160 may be implemented using any type or combination of suitable volatile and non-volatile memory or storage devices including hard disk, random access memory (RAM), static random access memory (SRAM), electrically erasable programmable read-only memory (EEPROM), erasable programmable read-only memory (EPROM), programmable read-only memory (PROM), read-only memory (ROM), magnetic memory, flash memory, magnetic or optical disk, multimedia card micro type memory, card-type memory (e.g., SD memory or XD memory), or other similar memory or data storage device. Furthermore, the mobile terminal 100 can operate in association with a web storage for performing a storage function of the memory 160 on the Internet.

The interface unit 170 may be implemented to couple the mobile terminal 100 with external devices. The interface unit 170 receives data from the external devices or is supplied with power and then transfers the data or power to the respective elements of the mobile terminal 100 or enables data within the mobile terminal 100 to be transferred to the external devices. The interface unit 170 may be configured using a wired/wireless headset port, an external charger port, a wired/wireless data port, a memory card port, a port for coupling to a device having an identity module, audio input/output ports, video input/output ports, and/or an earphone port.

The identity module is a chip for storing various kinds of information for authenticating a usage authority of the mobile terminal 100 and can include a User Identify Module (UIM), a Subscriber Identity Module (SIM), and/or a Universal Subscriber Identity Module (USIM). A device having the identity module (hereinafter called 'identity device') can be manufactured as a smart card. Therefore, the identity device is connectible to the mobile terminal 100 via the corresponding port.

When the mobile terminal 100 is connected to an external cradle, the interface unit 170 becomes a passage for supplying the mobile terminal 100 with a power from the cradle or a passage for delivering various command signals input from the cradle by a user to the mobile terminal 100. Each of the various command signals input from the cradle or the power can operate as a signal enabling the mobile terminal 100 to recognize that it is correctly loaded in the cradle.

The controller 180 typically controls the overall operations of the mobile terminal 100. For example, the controller 180 performs the control and processing associated with voice calls, data communications, and video calls. The controller 180 may include a multimedia module 181 that provides multimedia playback. The multimedia module 181 may be configured as part of the controller 180, or implemented as a separate component.

Moreover, the controller 180 can perform a pattern (or image) recognizing process for recognizing a writing input and a picture drawing input carried out on the touchscreen as characters or images, respectively.

The power supply unit 190 provides power required by various components of the mobile terminal 100. The power may be internal power, external power, or combinations of internal and external power.

Various embodiments described herein may be implemented in a computer-readable medium using, for example, computer software, hardware, or some combination of computer software and hardware. For a hardware implementation, the embodiments described herein may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a selective combination thereof. Such embodiments may also be implemented by the controller 180.

For a software implementation, the embodiments described herein may be implemented with separate software modules, such as procedures and functions, each of which performs one or more of the functions and operations described herein. The software codes can be implemented with a software application written in any suitable programming language and may be stored in memory such as the memory 160, and executed by a controller or processor, such as the controller 180.

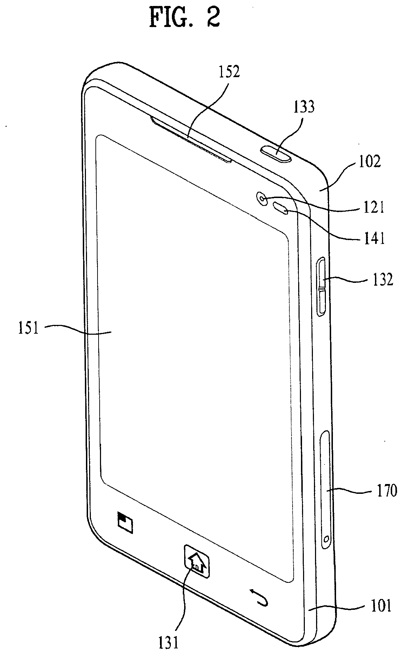

FIG. 2 is a front perspective view of a mobile terminal according to one embodiment of the present invention. The mobile terminal 100 illustrated in FIG. 2 has a bar type terminal body. However, the mobile terminal 100 may be implemented in a variety of different configurations. Examples of such configurations include folder-type, slide-type, rotational-type, swing-type and combinations thereof. For ease of description, the following disclosure will primarily relate to a bar-type mobile terminal 100. However, the present invention applies equally to other types of mobile terminals.

Referring to FIG. 2, the mobile terminal 100 includes a case (a casing, housing, or cover) constituting an exterior of the mobile terminal. In the present embodiment, the case can be divided into a front case 101 and a rear case 102. Various electric/electronic parts are loaded in a space (volume) provided between the front and rear cases 101 and 102. Optionally, at least one middle case can be further provided between the front and rear cases 101 and 102 in addition.

The cases 101 and 102 are formed by injection molding of synthetic resin or can be formed of metal substance such as stainless steel (STS), titanium (Ti) or the like for example.

A display 151, an audio output module 152, a camera 121, manipulating units 131 and 132, a microphone 122, and an interface unit 170 can be provided at the terminal body, and more particularly, at the front case 101. Manipulating units 131 and 132 are part of the user input unit 130.

The display 151 occupies most of a main face of the front case 101. The audio output module 152 and the camera 121 are provided at an area adjacent to an end portion of the display 151, while the manipulating unit 131 and the microphone 122 are provided at an area adjacent to the other end portion of the display 151. The manipulating unit 132 and the interface unit 170 can be provided at lateral sides of the front and rear cases 101 and 102. Another manipulating unit 133 can be provided on a top portion of the case 102.

The user input unit 130 is manipulated (operated) to receive a command for controlling an operation of the terminal 100. Furthermore, the user input unit 130 may include a plurality of manipulating units 131 and 132. The manipulating units 131 and 132 can be referred to as a manipulating portion and may adopt any tactile mechanism that enables a user to perform a manipulation action by touch.

Content input by manipulating units 131 and 132 can be divided between the two. For instance, a command such as start, end, and scroll is input to first manipulating unit 131. Furthermore, a command for a volume adjustment of sound output from the audio output module 152, or a command for a switching to a touch recognizing mode of the display 151 can be input to second manipulating unit 132.

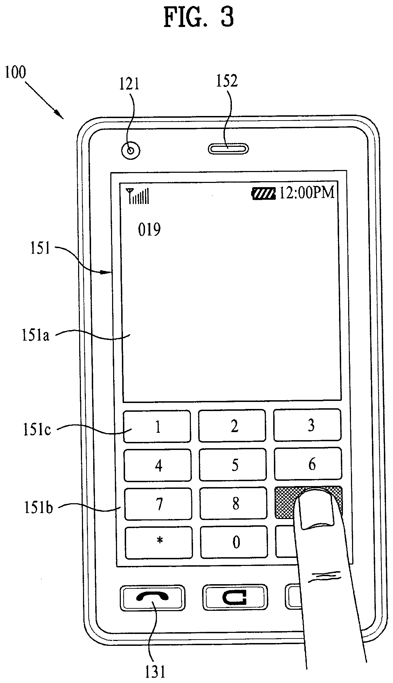

FIG. 3 is a front-view of the terminal 100 according to various embodiment of the present invention. First of all, various kinds of visual information can be displayed on the display 151. Such information can be displayed in characters, numerals, symbols, graphics, icons and the like. In order to input the information, at least one of the characters, numerals, symbols, graphics and icons are represented as a single predetermined array to be implemented in a keypad formation. This keypad formation is also referred to as 'soft keys'.

FIG. 3 shows that a touch applied to a soft key is input through a front face of a terminal body. The display 151 is operable through an entire area or by being divided into a plurality of regions. In the latter case, a plurality of the regions can be configured interoperable. For instance, an output window 151a and an input window 151b are displayed on the display 151. A soft key 151c representing a digit for inputting a phone number or the like is output to the input window 151b. If the soft key 151c is touched, a digit corresponding to the touched soft key is output to the output window 151a. If the first manipulating unit 131 is manipulated, a call connection for the phone number displayed on the output window 151a is attempted.

In addition, the display 151 or the touchpad 135 can be configured to receive a touch input by scroll. A user scrolls the display 151 or the touchpad 135 to shift a cursor or pointer located at an entity (e.g., icon or the like) displayed on the display 151. Furthermore, in case that a finger is shifted on the display 151 or the touchpad 135, a path of the shifted finger can be visually displayed on the display 151. This may be useful in editing an image displayed on the display 151.

Consider the scenario in which both the display (touch screen) 151 and the touchpad 135 are touched together within a predetermined or threshold time range, thus causing one function of the terminal can be executed. This simultaneous touch example may correspond to when the terminal body is held by a user using a thumb and a first finger (clamping). The above function can include activation or deactivation for the display 151 or the touchpad 135.

Meanwhile, such a graphic for pointing at a specific object on a display unit or selecting a menu from the display unit as an arrow, a finger and the like is called a pointer or a cursor. However, the pointer is frequently used to mean a finger, a stylus pen or the like for a touch manipulation and the like. In order to clearly discriminate the pointer and the cursor from each other in this disclosure, a graphic displayed on a display unit is named a cursor and such a physical means for performing a touch, a proximity touch, a gesture and the like as a finger, a stylus pen and the like is named a pointer.

### Video Editing through Visualization of Attribute Information

According to one embodiment of the present invention, when editing a video in a mobile terminal, a plurality of attribute information are analyzed for editing a target video. In addition, the analyzed attribute information is visualized on a time axis. Therefore, a user can conveniently obtain properties of the corresponding video.

Further, the attribute information corresponds to an attribute of a video and/or audio that configures the corresponding video. For instance, the attribute information may include one of a volume of an audio, a treble/bass ratio of the audio, a brightness of the video, a contrast, a color, the number of characters included in the video, a presence or non-presence of a specific character, a background, a place, a location and the like.

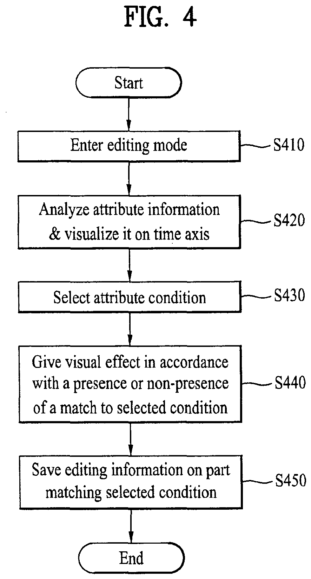

Next, FIG. 4 is a flowchart illustrating one example of a video editing method through visualization of attribute information according to one embodiment of the present invention. Referring to FIG. 4, the controller 180 of the mobile terminal 100 enters an editing mode (S410). In particular, the editing mode for editing a video can be entered in various situations including activating an application for a video editing in response to a user's command input, paging an application for a video editing in an application for a video playback and the like.

Once an editing target video is selected in the editing mode, the controller 180 analyzes attribute information on the editing target video and can then visualize the analysis result on a time axis (S420). In this instance, the attribute information of the editing target video may include information (e.g., a background change in accordance with a movement of a character, a change of surrounding audio, etc.) that may have a different value per time depending on a content of the corresponding video.

Hence, the controller 180 preferably performs a sampling in each of a plurality of different views in analyzing the attribute information of the editing target video. In doing so, the sampling may be performed in each frame. Alternatively, the sampling may be performed in a specific frame (e.g., I-frame (intra-coded frame) by MPEG, etc.) only in consideration of a size of a video, a compression ratio of the video, a resolution of the video, a performance of the controller 180 and the like. Alternatively, the sampling may be performed by prescribed periods.

The visualization means that the analyzed attribute information mentioned in the above description is displayed in a prescribed figure (e.g., a graph, a color, a combination of the graph and color, etc.) on a time axis in order for a user to visually recognize a change of the attribute information in accordance with a flow of time. In addition, the editing target video may be saved in the memory 160 of the mobile terminal 100.

Subsequently, at least one attribute condition may be selected for the analyzed attribute information (S430). In this instance, the selection of the attribute condition corresponds to a specific value or range of a specific attribute information being selected from the attribute information visualized as a result of the analysis.

If the attribute condition is selected, a prescribed visual effect may be given to the visualized attribute information depending on a presence or non-presence of the match of the selected condition in accordance with necessity or settings (S440). For instance, if the attribute condition selected in the step S430 is set to 'image brightness is equal to or greater than 50% and smaller than 70%', one section meeting the corresponding condition can be discriminated from another section failing to meet the corresponding condition in a manner of brightening a portion having a value between 50% ∼ 70% in a graph corresponding to the brightness in the attribute information visualized on the time axis.

Thereafter, editing information on the part of the editing target video, which meets the selected condition, can be saved as a prescribed form in the memory 160 in response to a user's selection or automatically (S450). In this instance, the editing information corresponds to the information for enabling a part selected through the editing mode by a user to be playable only in a manner that the information is referred to by a video play application or an application for the editing mode when the editing target video is played later. In addition, the part selected through the editing mode by the user may include a part that meets the selected attribute condition. Moreover, the editing information may include at least one of information on a selected condition, a time information corresponding to a part matching at least one selected condition, and a start/end frame information.

If the above-mentioned editing information is used, it is advantageous in only playing a desired part easily and conveniently without modifying an original video (e.g., an editing desired video). In addition, it is advantageous in avoiding the cumbersomeness or time loss in encoding the editing desired video again. Moreover, it is advantageous in occupying a storage space smaller than that in separately saving an edited video itself. Of course, the part matching the selected attribute condition can be encoded into a single video file in consideration of facilitation of playback or sharing rather than the above-mentioned advantages.

The above-described encoding method according to one embodiment of the present invention can be used together with other general editing methods (e.g., restriction on start time and end time, restriction on start frame and end frame, etc.).

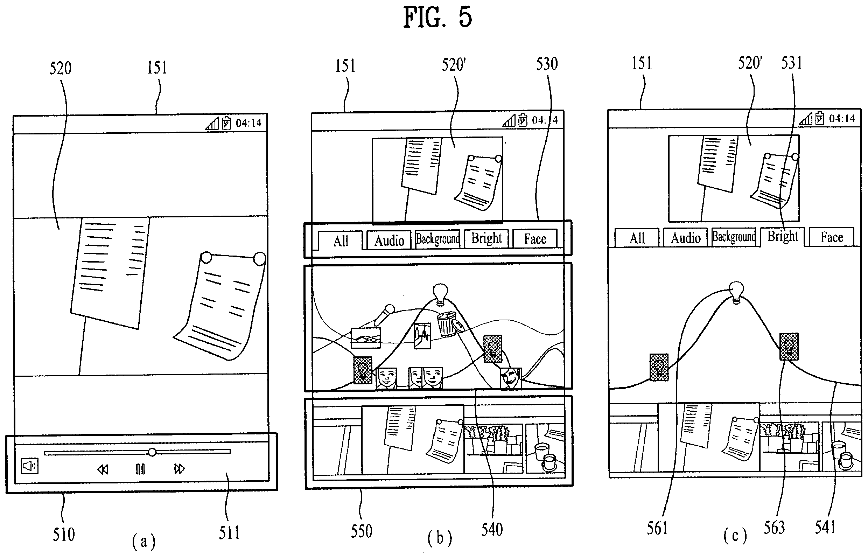

In the following description, an editing mode entering method and a process for visualizing an attribute information according to the present embodiment are explained in detail with reference to the accompanying drawings. In particular, FIG. 5 is a diagram illustrating one example of a process for visualizing attribute information through an editing mode in a mobile terminal according to one embodiment of the present invention.

Referring to FIG. 5 (a), as a video editing application is activated on the touchscreen 151, an editing target video can be played. In doing so, an image 520 of the editing target video is displayed on a middle part of the touchscreen 151 and a control panel 510 including menu buttons for various play state changes may be displayed on a bottom part of the touchscreen 151.

If an attribute information visualization menu button 511 is selected from the control panel 510, the controller 180 can enter an editing mode of the present invention. Alternatively, if a separate editing application of providing the above-described editing mode is paged from a play-dedicated application, the controller 180 can enter the editing mode of the present invention. In this instance, the paging can be performed through a long touch, other gestures or voice.

As the editing mode is entered, the controller 180 analyzes attribute information per time slot by analyzing the editing target video and then displays the analyzed attribute information on a time axis. For instance, referring to FIG. 5 (b), in the editing mode, a thumbnail 520' of the editing target video is displayed on a top end and a tab region 530 for selecting a type of the attribute information is displayed below the thumbnail 520'.

Moreover, a visualized region 540 for displaying the attribute information, which corresponds to an activated (or selected) tab in the tab region 530, as a prescribed figure on the time axis is displayed below the tab region 530. In FIG. 5 (b), as an item 'all' is selected from the tab region 530, changes according to the tile flow of all attribute information can be displayed as a combination of graphs and icons on the time axis. In doing so, in order to discriminate the attribute information from each other, the graphs respectively corresponding to the attribute information may differ from each other in color, thickness (boldness), shape (e.g., solid line, broken line, whole line, etc.) and/or the like. In addition, an icon indicating the property of the attribute information can be displayed together with the graph of the corresponding attribute information.

Moreover, a plurality of thumbnails can be displayed on a thumbnail region 550 provided to a bottom end of the touchscreen 151. Each of the thumbnails displayed on the thumbnail region 550 may correspond to a frame, in which a specific attribute information has a specific value, or may include a thumbnail sampled in each period.

In the situation shown in FIG. 5 (b), if a user intends to check a specific attribute information only, the user can select a tab corresponding to a check-desired attribute information of the tab region 530. For instance, referring to FIG. 5 (c), if a brightness tab 531 is selected from the tab region 530, a graph 541 corresponding to a brightness information and icons 561 and 563 corresponding to the brightness information can be only displayed on the visualized region 540. Hence, through a height of the graph, the user is easily aware that the image brightness of the editing target video is relatively low in early and late stages but relatively high in a middle stage.

Through the light-out icons 563 in the early and late stages, the user is aware that the present graph relates to the brightness and that the corresponding parts have low brightness. Through the light-up icon 561 in the middle state, the user is aware that the brightness at the corresponding timing is high.

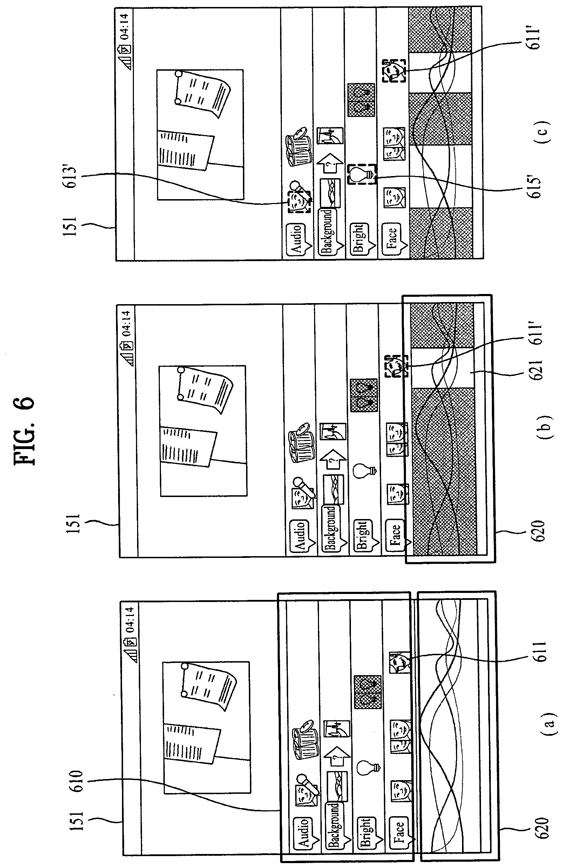

Next, FIG. 6 is a diagram illustrating another example of a process for visualizing attribute information through an editing mode in a mobile terminal according to one embodiment of the present invention. Referring to FIG. 6, unlike FIG. 5, icons and graphs corresponding to attribute information are displayed on separate regions, respectively. Referring to FIG. 6 (a), icons corresponding to the attribute information are displayed on an icon region 610 by types and graphs corresponding to the attribute information are displayed on a graph region 620.

If a user selects a specific face icon 611 by applying a touch input thereto, referring to FIG. 6 (b), a visual effect 611' is given to the selected icon and a region 621 corresponding to the selected icon can be displayed bright on the graph region 620 as well. Thus, the user can conveniently check whether a character corresponding to the selected icon appears from where to where.

Referring to FIG. 6 (c), if icons 613' and 615' are additionally selected, parts corresponding to the selected icons can be displayed bright on the graph region 620. In doing so, a user can page a menu for determining whether to save a prescribed information through a prescribed menu manipulation. If a save command is input through the paged menu, information on the part (i.e., the part displayed bright in the graph region) of an editing target video having an attribute information corresponding to the selected icon can be saved as an editing information. Alternatively, after a touch input has been applied to at least two parts of the graph region displayed bright, if a distance between the touched points is decreased while the touched state is maintained (i.e., if a touch gesture for gathering icons or bright regions is applied), an editing information including the corresponding part in the editing target video can be saved.

Meanwhile, according to the description with reference to FIG. 6, an attribute condition is selected through each icon, by which the present invention is non-limited. For example, a check box system can be used for determining whether to select each of a plurality of attribute conditions, a slider system for determining a value of each of a plurality of attribute conditions and the like.

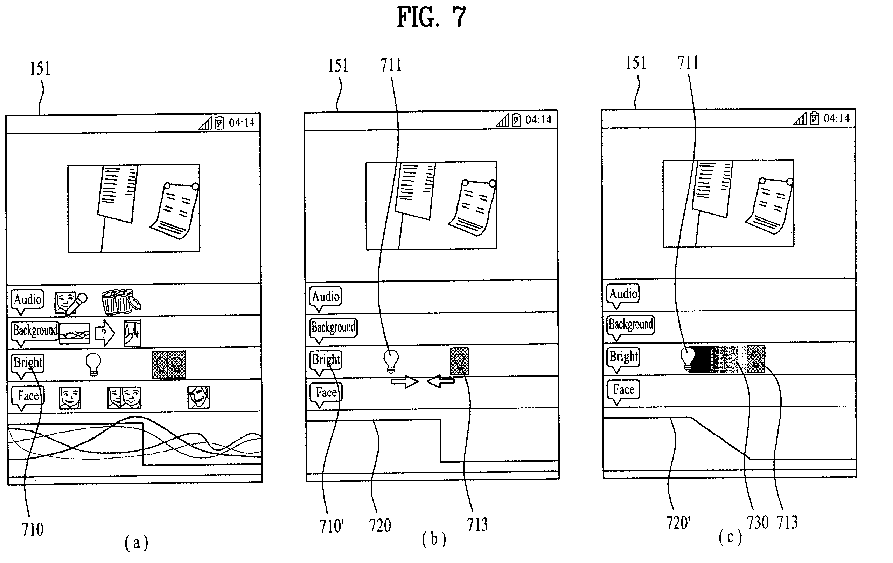

In the following description, a simple editing method through an icon region is explained with reference to FIG. 7. In particular, FIG. 7 is a diagram illustrating one example of a video editing method using an icon region in a mobile terminal according to one embodiment of the present invention. In FIG. 7, an icon region and a thumbnail region are separately provided similar to that shown in FIG. 6.

Referring to FIG. 7, as a tab 710 corresponding to the brightness attribute information is selected from an icon region (FIG. 7 (a)), a visual effect 710' is given to the selected tab and a graph 720 corresponding to the selected tab is displayed on a graph region only. In this instance, a user is aware that brightness of an editing target video rapidly decreases after a middle state by referring to the graph 720 and icons 711 and 713 of the selected brightness tab. If the user intends to edit the rapid brightness change into a gradual brightness change, the user can simultaneously drag the two icons 711 and 713 in arrow directions shown in FIG. 7 (b). Hence, referring to FIG. 7 (c), as a visual effect 730 indicating the gradual brightness change is applied between the two icons 711 and 713 is given, the graph corresponding to the brightness attribute information of the graphic region can be changed into a modified graph 720'.

Further, when dragging two icons corresponding to different sounds closer to each other in an audio tab, a fade-in/out effect is given while switching audios corresponding to the two icons. This may be applicable to an icon or graph section that represents a part having a definitely different attribute such as a background and the like as well as an audio.

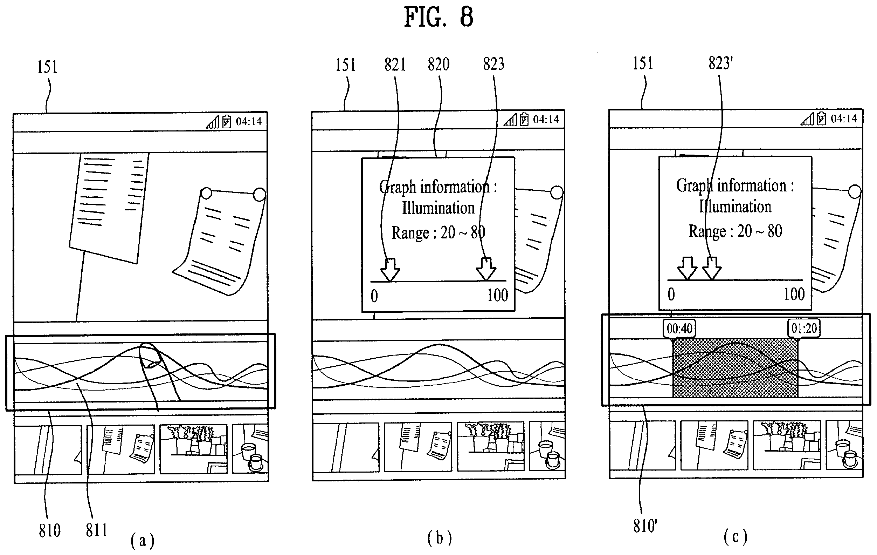

In the following description, an editing method using a graph is explained with reference to FIG. 8. In particular, FIG. 8 is a diagram illustrating one example of a video editing method using a graph region in a mobile terminal according to one embodiment of the present invention. In FIG. 8, attribute information is visualized into a graph region only.

Referring to FIG. 8, if a specific graph 811 is selected from a graph region 810 through a touch input (FIG. 8 (a)), a popup window 820 including a detailed information on an attribute information corresponding to the selected graph can be displayed on the touchscreen 151 (FIG. 8 (b)). In particular, a type (e.g., illumination) of the attribute information and a vertical line indicating a distribution of the corresponding attribute information in an editing target video can be included in the popup window 820. In this instance, a left arrow 821 indicates a minimum value of the illumination and a right arrow 823 indicates a maximum value of the illumination.

If a user shifts the right arrow 823 in a left direction, referring to FIG. 8 (c), the maximum value of the illumination changes to correspond to a changed location 823' of the arrow and a part satisfying a changed illumination range may be displayed bright on a graph region 810'. Through this, the user can check the part, which meets the selected condition (i.e., the changed illumination range) in the editing target range.

Meanwhile, after a user has selected a specific graph, if the user drags the selected graph to a touchscreen edge through a touch input, the controller 180 can stop displaying the corresponding graph on the graph region. Thereafter, if the user touches the graph region consecutively multiple times, the controller 180 can redisplays the graph. Subsequently, the information (i.e., a time or frame information on the corresponding section) on the part meeting the selected condition can be saved as editing information.

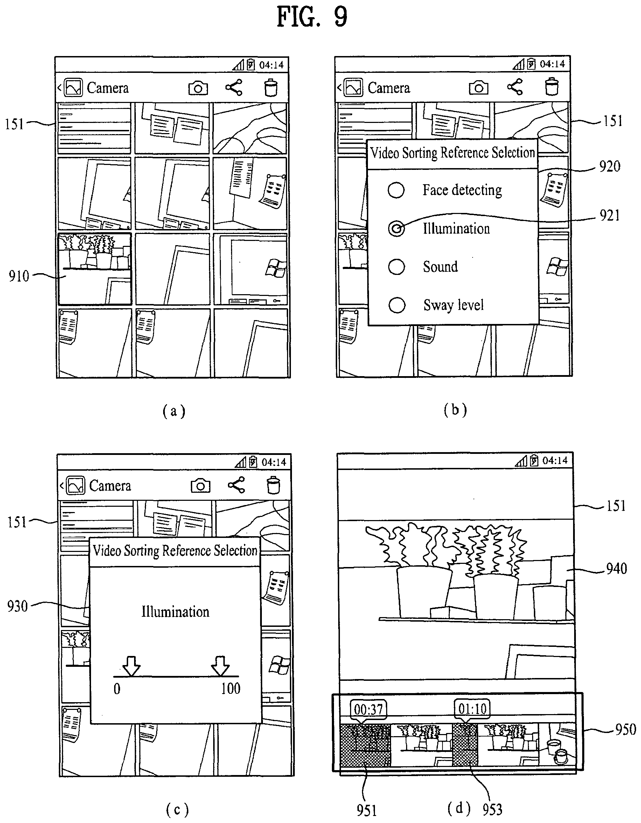

According to another aspect of the present invention, while a video list is displayed, a video editing in accordance with an attribute condition selection can be performed. This is described in detail with reference to FIGs. 9 to 11 as follows.

FIG. 9 is a diagram illustrating one example of a video editing method according to another aspect of one embodiment of the present invention. Referring to FIG. 9 (a), a list of editable videos is displayed as thumbnails on the touchscreen 151. A user can select an attribute information by applying a touch input of a specific pattern (e.g., a long touch, etc.) to the thumbnail 910 corresponding to an editing desired video.

For instance, if an editing desired video is selected, referring to FIG. 9 (b), a popup window 920 including a list of selectable attribute information is displayed. If the user selects an illumination attribute information 921 from the popup window 920, referring to FIG. 9 (c), a popup window 930 for checking and determining a detailed condition of the illumination attribute information can be selected. In particular, a vertical line including an arrow indicating a minimum value of an illumination and an arrow indicating a maximum value of the illumination can be included in the popup window 930.

The present vertical line and the arrows have functions similar to those described with reference to FIG. 8 (b). Meanwhile, the user changes an illumination range using the arrow(s) and can then save editing information corresponding to the changed illumination range. Thereafter, if the corresponding video is played again using the saved editing information, referring to FIG. 9 (d), a played image 940 is displayed on a middle part of the touchscreen and thumbnails 951 and 953 corresponding to parts failing to meet the selected illumination condition may be displayed dark on a thumbnail region 950 provided to a bottom end of the touchscreen 151. Hence, the user is easily aware of the information on the edited part by referring to the thumbnail region 950.

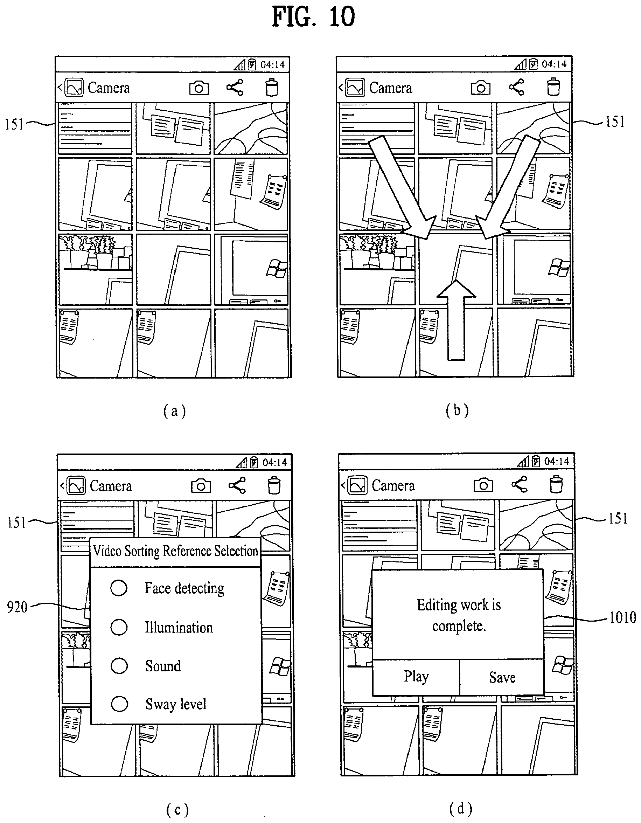

In the following description, a method of simultaneously editing a plurality of editing target videos is explained in detail with reference to FIG. 10. In particular, FIG. 10 is a diagram illustrating one example of a method of editing a plurality of editing target videos according to another aspect of one embodiment of the present invention.

Referring to FIG. 10, a list of editable videos is displayed as thumbnails on the touchscreen 151 (FIG. 10 (a)). A user can select thumbnails corresponding to a plurality of editing desired videos through a multi-select function. Hence, a prescribed visual effect indicating that the corresponding thumbnail is selected can be given to each of the selected thumbnails. Subsequently, after a touch input has been simultaneously applied to at least three points on the touchscreen, if the touched points are moved toward a center while the touched state is maintained (FIG. 10 (b)), a popup window 920 including a list of selectable attribute information is displayed (FIG. 10 (c)).

Subsequently, if the user selects a desired attribute information and a condition to be applied thereto from the popup window 920, the controller 180 creates an editing information for each of a plurality of the selected editing target videos in accordance with the selected condition and can display a popup window 1010 for enabling the user to select whether to ply each of the videos directly or whether to save the corresponding editing information in accordance with the created editing information (FIG. 10 (d)).

Thereafter, the controller 180 can perform an operation in accordance with the user's selection. Of course, instead of creating the editing information for each of a plurality of the selected videos, the controller 180 can create editing information for generating such an effect as playing a single video by combining the parts selected from a plurality of the selected videos, each of which meets the selected attribute condition, together in accordance with settings.

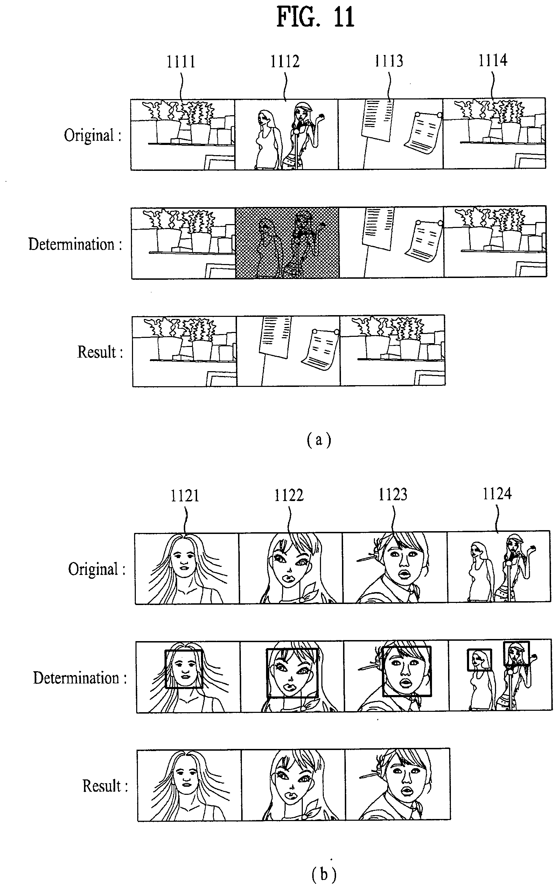

In the following description, a detailed example of determining whether a selected attribute condition is met per frame in a mobile terminal is described with reference to FIG. 11. In particular, FIG. 11 is a diagram illustrating one example of a method of determining whether a selected attribute condition is met per frame in a mobile terminal according to one embodiment of the present invention.

For instance, referring to FIG. 11 (a), the controller 180 determines whether an attribute condition is met for four frames 1111 to 1114 extracted by predetermined time intervals. In addition, assume the selected attribute condition is 'no face'. In this instance, the controller 180 performs a face recognition on each of the frames. As a result of the determination, if a face is detected from the 2^{nd} frame 1112, the controller 180 excludes the corresponding frame from the editing information.

In another instance, referring to FIG. 11 (b), the controller 180 determines whether an attribute condition is met for four frames 1121 to 1124 extracted by predetermined time intervals. In addition, assume when a selected attribute condition is '1 face'. In this instance, the controller 180 performs a face recognition on each of the frames. As a result of the determination, if two faces are detected from the 4^{th} frame 1124, the controller 180 excludes the corresponding frame from an editing information. Therefore, when playing each video in accordance with the editing information, the 2^{nd} frame 1112 is skipped in FIG. 11 (a) or the 4^{th} frame 1123 is skipped in in FIG. 11 (b).

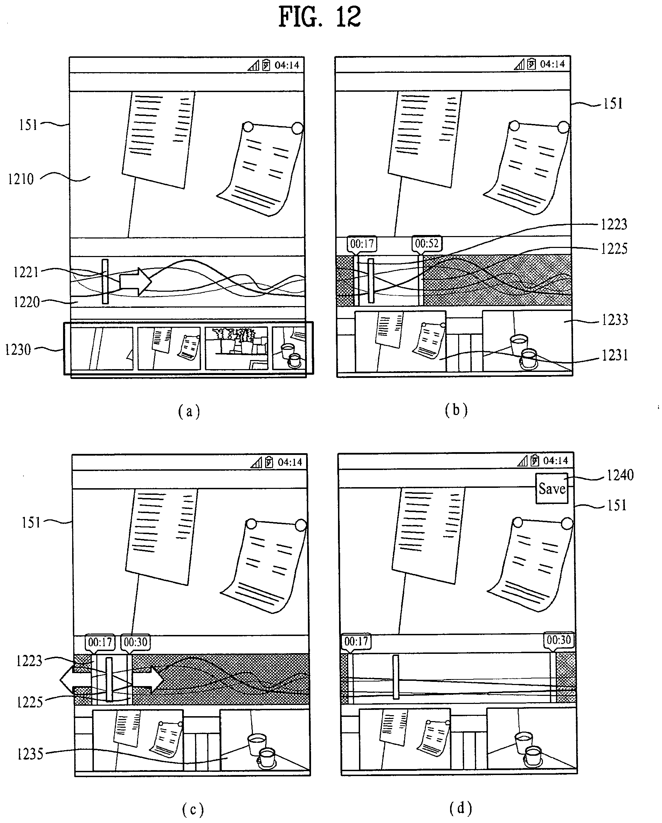

According to another aspect of the present invention, a method of editing sections in detail by extending a time axis indicating attribute information is provided. This is described in detail with reference to FIG. 12 as follows. In particular, FIG. 12 is a diagram illustrating one example of a section editing method according to another aspect of one embodiment of the present invention.

Referring to FIG. 12 (a), in editing mode, a played image 1210 of an editing target video is displayed on a top end of the touchscreen 151 and a graph region 1220 for visualizing and displaying attribute information as a graph is displayed on a middle part of the touchscreen 151. In addition, a progress bar 1221 for indicating that the played image 1210 corresponds to where-about on a time axis can be displayed on the graph region 1220 together with a graph according to each attribute information.

In particular, if a location of the progress bar 1221 within the graph region 1220 is changed by a touch input or the like, the played image 1210 displayed on the top end of the touchscreen is changed to correspond to the changed location. A thumbnail region 1230 may be arranged on a bottom end of the touchscreen 151.

Referring to FIG. 12 (b), if a prescribed touch command is input to the graph region, a section start rod 1223 and a section end rod 1225 can be displayed. In addition, a thumbnail 1231 corresponding to a location of the section start rod 1223 and a thumbnail 1233 corresponding to a location of the section end rod 1225 can be displayed on the thumbnail region 1230 in an enlarged manner. In addition, the rest of the section of the graph region 1220 except the section between the two rods 1223 and 1225 can be displayed dark. Moreover, time information corresponding to the location of the corresponding rod can be displayed above each of the rods.

For example of a method of paging two rods, there is a method of applying a touch input of a specific pattern to the progress bar 1221, a method of simultaneously applying a touch input to a point at which each rod will be arranged, a method of enabling each rod to be displayed at a default location in response to a prescribed menu manipulation, or the like.

Thus, a user can change a selected section by changing a location of the rod appropriately. For instance, when attempting to change a section between 17 and 52 seconds into a section between 17 and 30 seconds, referring to FIG. 12 (c), the user can shift the section end rod 1225 in a left direction. Hence, a right thumbnail displayed on the thumbnail region 1230 can be changed into a thumbnail 1235 corresponding to the changed location of the section end rod 1225.

If the approximate section selection is complete by shifting each rod, the user can drag the two rods apart from each other simultaneously for a detailed section selection. In response to a dragged distance between the two rods, referring to FIG. 12 (d), a selected section between the two rods can be extended. Hence, each graph in the selected section can be displayed in a manner of elongated in a horizontal direction. As the selected section is extended in the horizontal direction, a time corresponding to the shifted distance of the progress bar or the rods becomes smaller than that of the previous time, a further detailed section adjustment is possible.

For instance, if a 1-cm shift of the section end rod 1225 on the touchscreen corresponds to a 10-second change on a time axis before the extension, the 1-cm shift may correspond to a 2-second change on the time axis. Hence, the user shifts the progress bar 1221 on the extended section, thereby checking an enlarged image at a specific timing point with the played image 1210 on the top end. In addition, the user can determine a start and end of a section in detail by shifting the two rods appropriately.

If an extension of a section occurs, the controller 180 can control a save menu 1240 to be displayed on a right top end of the touchscreen 151. If the save menu 1240 is selected, the controller 180 can save information on the selected section as an editing information. In order to save the editing information, a touch gesture may be applicable instead of using a save menu button.

For instance, as the two rods are simultaneously dragged to get closer to each other, if the extended section returns to a previous state, the controller 180 can save the editing information on the selected section. Alternatively, if the thumbnail corresponding to a section start point displayed on the thumbnail region and the thumbnail corresponding to a section end point displayed on the thumbnail region are simultaneously dragged to the save menu 1240, the controller 180 can save the editing information as well.

Meanwhile, after a section has been selected by one of the above described embodiments, and more particularly, by one of the methods described with reference to FIG. 8 and FIG. 12, if a selected section displayed on the time axis is selected through a touch input (e.g., a long touch) of a specific pattern, features (e.g., a brightness range of the corresponding section, an appearing character in the corresponding section, an audio level of the corresponding section, etc.) of an attribute information corresponding to the corresponding section can be saved in the memory. Thereafter, if another video is changed into an editing target video, it can conveniently select a section having the features of the attribute information previously saved in the memory from the new editing target video through a prescribed command input.

This method is convenient when searching several editing target videos for parts having similar features and editing the found parts. Moreover, in case that an editing target video is not changed, a different section is selected and the features of the attribute information saved in the memory can be applied to the different section. For instance, after a section having a brightness set to 50 ∼ 60 has been selected and 'brightness value: 50 ∼ 60' has been then saved as the feature of the attribute information, if a different section is selected and the saved feature of the attribute information is paged, the brightness value of the selected different section can be edited to have a range of 50 ∼ 60.

In another instance, even if the brightness change is edited to be gradually performed like FIG. 7, the brightness change can be set to be performed gradually in a manner of saving the corresponding editing information, selecting a different section, paging the saved editing information, and then applying the paged editing information to the selected different section.

### Video Editing in Recording

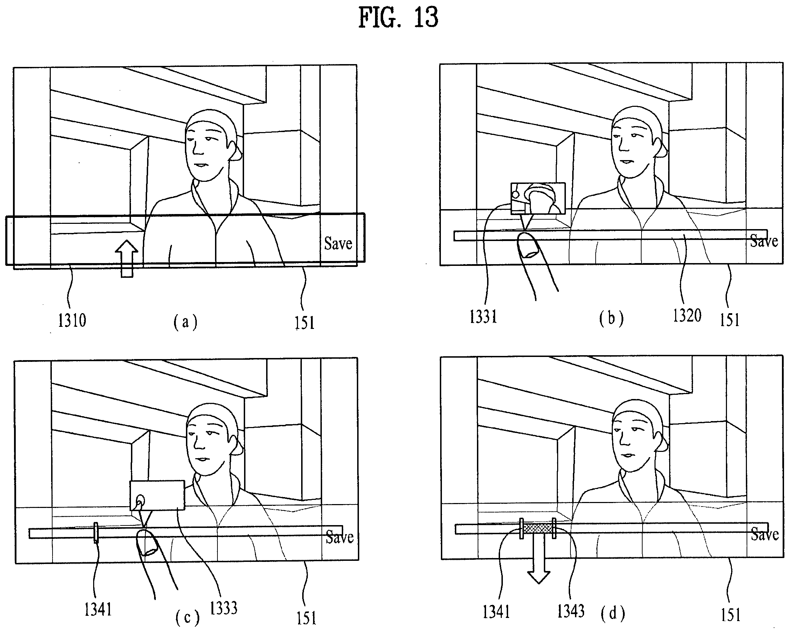

According to another embodiment of the present invention, a method of editing a currently recorded video in the course of video recording is provided. First, a method of deleting a photographed image in part is described in detail with reference to FIG. 13 as follows.

FIG. 13 is a diagram illustrating one example of a method of editing a video partially while video shooting according to another aspect of the present invention. In particular, referring to FIG. 13 (a), as the video shooting starts, an image taken through the camera 121 is displayed on the touchscreen 151. If a touch input of a specific pattern (e.g., a flicking touch input applied in a top direction from a bottom part of the touchscreen, etc.) is input to a bottom region 1310 of the touchscreen 151, referring to FIG. 13 (b), a progress bar 1320 can be displayed on a bottom end region 1310 of the touchscreen 151.

In this instance, a left end of the progress bar 1320 corresponds to a shooting start point and a right end of the progress bar 1320 corresponds to a timing point of inputting a specific pattern to the bottom end region 1310. A user can sequentially select start and end points of a section to delete by applying a touch input two times to the progress bar 1320.

In order to help the selection of each of the points, an image corresponding to the touched point can be displayed as a thumbnail while the touch input is maintained. For instance, referring to FIG. 13 (b), while a 1^{st} touch input is maintained on the progress bar 1320, a thumbnail 1331 corresponding to the touched point can be displayed. As the user releases the touch input after confirming a section start point through the thumbnail 1331, referring to FIG. 13 (c), a start point indicator 1341 may be displayed at the point from which the 1^{st} touch input has been released.

Similar to that of the start point selection, while the 2^{nd} touch input is maintained, a thumbnail 1333 corresponding to the touched point may be displayed. After the user has confirmed the section end point through the thumbnail 1333, if the user releases the touch input, referring to FIG. 13 (d), an end point indicator 1343 can be displayed at a point from which the 2^{nd} touch input is released.

If the user drags the part (i.e., the selected section) between the two indicators on the progress bar in a bottom direction, the controller 180 can create an editing information for deleting to edit the corresponding part. If the user drags the part between the two indicators on the progress bar to a different location within the progress bar, the controller 180 can create editing information for editing the corresponding part in a manner of shifting it to the dragged location shifting.

In addition, in order to prevent a user from activating an undesired editing by a touch mistake, the corresponding function can be set to be activated only if a drag touch is performed after a long touch. Alternatively, when an icon for the corresponding function is displayed, only if the icon is selected, the corresponding function can be set to be activated.

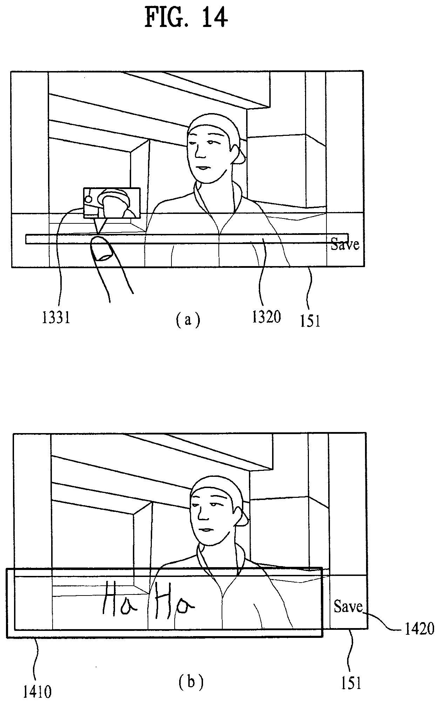

In the following description, a method of setting tag information is explained in detail with reference to FIG. 14. In particular, FIG. 14 is a diagram illustrating one example of a method of setting tag information for a video in a mobile terminal according to another aspect of the present invention.

Referring to FIG. 14 (a), while a progress bar 1320 is paged by the aforementioned method, a thumbnail 1331 can be displayed as long as a 1^{st} touch input is maintained. In doing so, if the touch input applied onto the progress bar 1320 stays at a prescribed point over a prescribed duration or a 2^{nd} touch input is input to the same point and then released, referring to FIG. 14 (b), a handwriting region 1410 and a save menu button 1420 can be displayed on a bottom end of the touchscreen 151.

Thus, a user can directly input a tag information to a desired view of a previously photographed part by inputting the tag information to the handwriting region 1410 through a touch input and then selecting the save menu button 1420. However, the handwriting region is provided to facilitating a quick tag input in the course of shooting and may be replaced by a virtual keypad.

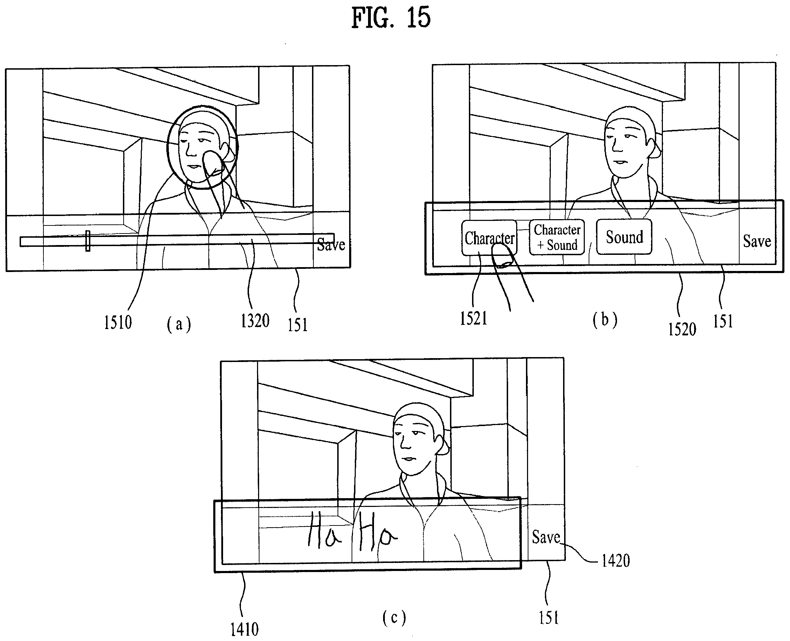

In the following description, a method of setting tag information for a currently photographed image is explained with reference to FIG. 15. In particular, FIG. 15 is a diagram illustrating another example of a method of setting tag information for a video in a mobile terminal according to another aspect of the present invention.

Referring to FIG. 15 (a), while a progress bar 1320 is paged by the aforementioned method, the controller 180 can detect a touch input to a specific point 1510 of a currently taken image. Subsequently, the controller 180 analyzes the image at the touched point. If the controller 180 determines the analyzed image as a face, referring to FIG. 15 (b), the controller 180 can display a menu 1520 for enabling a user to select a category of tag information settable for the corresponding face.

If a character menu 1521 is selected, referring to FIG. 15 (c), a handwriting region 1410 and a save menu button 1420 can be displayed. The controller 180 can set a tag information input through the handwriting region 1410 for the touched point 1510. Meanwhile, a menu 'sound' can be selected from the menu 1520 for enabling a user to select a category if the user intends to set a tag for an audio currently input through the microphone 122.

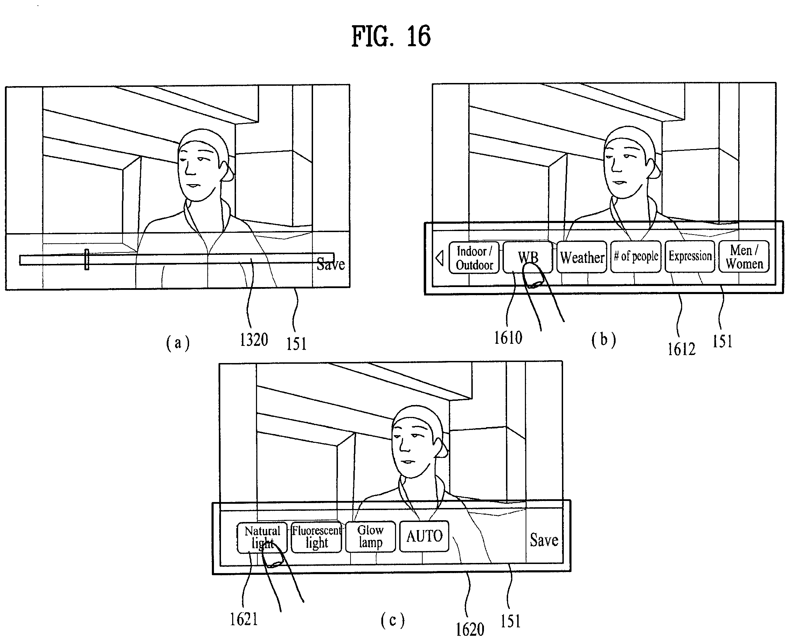

According to another aspect of another embodiment of the present invention, by setting an automatic tag creation reference, tag information can be automatically set for a video taken thereafter in accordance with a determination made by the controller 180. This is described with reference to FIG. 16 as follows.

FIG. 16 is a diagram illustrating one example of a process for selecting an automatic tag creation reference in a mobile terminal according to another aspect of another embodiment of the present invention. In particular, referring to FIG. 16, while a progress bar 1320 is paged by the aforementioned method in the course of a video shooting, if a specific touch input (e.g., multi-touch) to the progress bar 1320 is detected (FIG. 16 (a)), the controller 180 can control a popup window 1610 including a list of settable tags to be displayed on the touchscreen 151 (FIG. 16 (b)).

If a white balance menu (WB) 1610 is selected, referring to FIG. 16 (c), a white balance list 1620 can be displayed. In doing so, if a natural light menu 1621 is selected, the controller 180 recognizes a currently taken image as a natural light and can control a tag 'natural light' to be automatically inserted in an editing information of a future-taken image if the future-taken image has illumination/radiation intensity similar to that of the currently taken image. Through this, a user sets up a reference in advance and is then able to control tag information to be automatically recorded in an editing information on a future-taken image without inputting the tag information one by one.

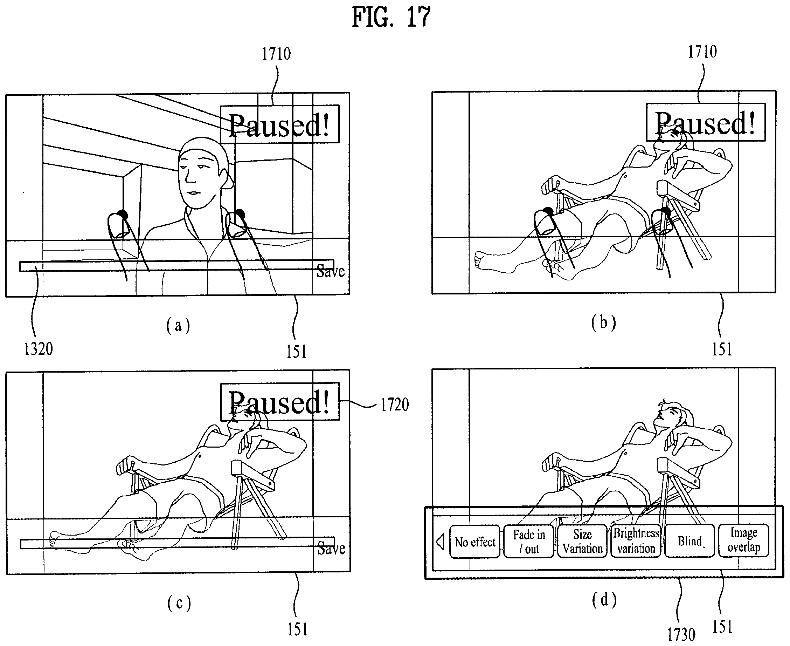

In the following description, a method of pausing and resuming a video shooting and a method of selecting an effect to insert in case of connecting images before and after a pause are explained in detail with reference to FIG. 17. In particular, FIG. 17 is a diagram illustrating one example of a method of pausing and resuming a video shooting in a mobile terminal according to a further aspect of another embodiment of the present invention.

Referring to FIG. 17 (a), as a multi-touch is input to the touchscreen 151 in the course of a video shooting, while the touch state is maintained, the shooting may be paused. While the shooting is paused, an indicator 1710 indicating that the shooting is paused is displayed on a right top end of the touchscreen 151. As the shooting is paused, although an image taken through the camera is not recorded in the memory 160, a preview image may keep being displayed on the touchscreen 151.

Thereafter, referring to FIG. 17 (b), when a photographing desired subject is displayed through the preview image, the user may be able to release the multi-touch input to continue the shooting. Hence, referring to FIG. 17 (c), an indicator 1720 indicating that the shooting is resumed can be displayed. As the shooting is resumed, referring to FIG. 17 (d), a menu 1730 for selecting an effect to insert on connecting images before and after the shooting pause can be displayed.

If an effect is selected from the menu 1730, the selected effect can be saved as editing information on the taken video in the memory 160. When the taken video is played back later, the controller 180 can give the selected effect to the replacement of the images before and after the shooting pause by referring to the preset editing information.

Like FIGs. 15 to 17, the progress bar 1320 may not affect an activated function. In this instance, the progress bar may be regarded as simply displayed to indicate that an editing function is in active state. Hence, the progress bar can be omitted. In addition, an indicator indicating that the corresponding function is active can be displayed instead of the progress bar.

Moreover, as mentioned in the foregoing description, the tag information is set to be used as one of attribute information in a video editing method according to one embodiment of the present invention. Therefore, the automatic tag creation reference can be called an editing information automatic creation reference. Meanwhile, after a section has been selected from the previously recorded materials in the course of a recording through one of the methods according to the embodiments mentioned in the foregoing description, if the selected section is selected through a touch input (e.g., a long touch, etc.) of a specific pattern, a tag information (e.g., a brightness range of the corresponding section, an appearing character in the corresponding section, an audio tag of the corresponding section, etc.) corresponding to the corresponding section can be saved in the memory.

Thereafter, after a different section has been selected in the course of the shooting, the tag information previously saved in the memory can be exactly inserted in the newly selected section through a prescribed command input. This method may be convenient especially in case of setting the same tag for a plurality of sections in the course of a shooting.

Accordingly, the present invention provides the following advantages. First, a user can edit a video more conveniently through a mobile terminal according to at least one embodiment of the present invention. Secondly, the present invention visualizes various attribute information of a video, thereby enabling a user to edit the video using the information selectively. Thirdly, the present invention extends a progress bar corresponding to a specific section, thereby facilitating a section editing of a video more efficiently. Fourthly, according to the present invention, through a gesture input in the course of a video shooting, editing related information is created or an editing related information automatic creation reference can be set up for the creation of the editing related information.

According to one embodiment of the present invention, the above-described methods can be implemented in a program recorded medium as processor-readable codes. The processor-readable media include all kinds of recording devices in which data readable by a processor are saved. The processor-readable media include ROM, RAM, CD-ROM, magnetic tapes, floppy discs, optical data storage devices, and the like for example and also include carrier-wave type implementations (e.g., transmission via Internet).

The aforementioned embodiments are achieved by combination of structural elements and features of the present invention in a predetermined type. Each of the structural elements or features should be considered selectively unless specified separately. Each of the structural elements or features may be carried out without being combined with other structural elements or features. Also, some structural elements and/or features may be combined with one another to constitute the embodiments of the present invention.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

## Claims

1. A mobile terminal (100), comprising:
a controller (180) configured to enter an editing mode for editing a selected video, to analyze how a plurality of attributes of the selected video change over a playing time of the selected video, and to receive a selection of at least one attribute among the plurality of analyzed attributes;
a touchscreen display (151) configured to display attribute information for the selected at least one attribute on a time axis corresponding to the playing time of the selected video;
said controller configured to receive a selection of at least one point of the attribute information along the time axis; and
a memory (160) configured to store editing information including the attribute information on at least one section of the video corresponding to the selected point as editing information,
wherein the editing information enables the at least one section to be playable by a video application without modifying the selected video.

2. The mobile terminal of claim 1, wherein the controller is further configured to:
display a plurality of attribute information along the time axis corresponding to the plurality of analyzed attributes on the touch screen display,
receive a selection of the at least one attribute among the plurality of analyzed attributes, and
display only the attribute information for the selected at least one attribute on the touch screen display.

3. The mobile terminal of claim 2, wherein the plurality of displayed attribute information includes at least one of graphs representing the change in a corresponding attribute of the selected video over the playing time, icon information representing the change of the corresponding attribute of the selected video over the playing time, and color information representing the change of the corresponding attribute of the selected video over the playing time.

4. The mobile terminal of claim 3, wherein the plurality of displayed attribute information is displayed as graphs including changing icon information along respective graphs representing the change of the corresponding attribute of the selected video over the playing time.

5. The mobile terminal of claim 3, wherein the plurality of displayed attribute information are displayed individually for each attribute.

6. The mobile terminal of claim 3, wherein the controller is further configured to:
display a graphic user interface including tabs for each respective attribute on the touchscreen display,
receive a selection of a particular tab among the tabs included in the displayed graphic user interface, and
display only the attribute information for the respective attribute of the selected tab on the touchscreen display.

7. The mobile terminal of claim 3, wherein the graphs for the analyzed attributes are displayed together along a timeline and the icon information for the analyzed attributes are displayed along individual and separated timelines for each individual attribute.

8. A method of controlling a mobile terminal, the method comprising:
entering (S410), via a controller of the mobile terminal, an editing mode for editing a selected video;
analyzing (S420), via the controller, how a plurality of attributes of the selected video change over a playing time of the selected video;
receiving a selection of at least one attribute among the plurality of analyzed attributes;
displaying (S420), via a touchscreen display of the mobile terminal, attribute information for the selected at least one attribute on a time axis corresponding to the playing time of the selected video;
receiving (S430) a selection of at least one point of the attribute information along the time axis; and
storing (S450), in a memory associated with the mobile terminal, editing information including the attribute information on at least one section of the video corresponding to the selected point as editing information,
wherein the editing information enables the at least one section to be playable by a video application without modifying the selected video.

9. The method of claim 8, further comprising:
displaying, via the touchscreen display, a plurality of attribute information along the time axis corresponding to the plurality of analyzed attributes;
receiving a selection of the at least one attribute among the plurality of analyzed attributes; and
displaying, via the touchscreen display, only the attribute information for the selected at least one attribute.

10. The method of claim 9, wherein the plurality of displayed attribute information includes at least one of graphs representing the change in a corresponding attribute of the selected video over the playing time, icon information representing the change of the corresponding attribute of the selected video over the playing time, and color information representing the change of the corresponding attribute of the selected video over the playing time.

11. The method of claim 10, wherein the plurality of displayed attribute information is displayed as graphs including changing icon information along respective graphs representing the change of the corresponding attribute of the selected video over the playing time.

12. The method of claim 10, wherein the plurality of displayed attribute information are displayed individually for each attribute.

13. The method of claim 10, further comprising:
displaying a graphic user interface including tabs for each respective attribute;
receiving a selection of a particular tab among the tabs included in the displayed graphic user interface; and
displaying only the attribute information for the respective attribute of the selected tab.

14. The method of claim 10, wherein the graphs for the analyzed attributes are displayed together along a timeline and the icon information for the analyzed attributes are displayed along individual and separated timelines for each individual attribute.

15. The method of claim 10, further comprising:
receiving (S430) a selection of one icon information along the individual timeline for a corresponding attribute; and
identifiably displaying (S440) on the graphs a section of the video corresponding to the selected one icon information.

## Patentansprüche

1. Mobiles Endgerät (100), mit:
einer Steuereinheit (180), die dazu konfiguriert ist, in einen Editiermodus zum Editieren eines ausgewählten Videos einzutreten, zu analysieren, wie sich mehrere Attribute des ausgewählten Videos über eine Spielzeit des ausgewählten Videos verändern, und eine Auswahl zumindest eines Attributs aus den mehreren analysierten Attributen zu empfangen,
einer Berührungsbildschirm-Anzeige (151), die dazu konfiguriert ist, Attributinformation für das zumindest eine ausgewählte Attribut auf einer der Spielzeit des ausgewählten Videos entsprechenden Zeitachse anzuzeigen,
wobei die Steuereinheit dazu konfiguriert ist, eine Auswahl zumindest einer Stelle der Attributinformation entlang der Zeitachse zu empfangen, und
einem Speicher (160), der dazu konfiguriert ist, Editierinformation einschließlich der Attributinformation für zumindest einen der ausgewählten Stelle entsprechenden Abschnitt des Videos als Editierinformation zu speichern,
wobei die Editierinformation es ermöglicht, dass der zumindest eine Abschnitt mittels einer Videoanwendung abspielbar ist, ohne das ausgewählte Video zu verändern.

2. Mobiles Endgerät nach Anspruch 1, bei dem die Steuereinheit ferner konfiguriert ist zum:
Anzeigen mehrerer Attributinformationen entlang der Zeitachse entsprechend den mehreren analysierten Attributen auf der Berührungsbildschirm-Anzeige,
Empfangen einer Auswahl des zumindest einen Attributs aus den mehreren analysierten Attributen, und
Anzeigen nur der Attributinformation für das ausgewählte zumindest eine Attribut auf der Berührungsbildschirm-Anzeige.

3. Mobiles Endgerät nach Anspruch 2, bei dem die mehreren angezeigten Attributinformationen Diagramme umfassen, die die Änderung eines zugehörigen Attributs des ausgewählten Videos über die Spielzeit darstellen, und/oder Icon-Information, die die Änderung des zugehörigen Attributs des ausgewählten Videos über die Spielzeit darstellt, und/oder Farbinformation, die die Änderung des zugehörigen Attributs des ausgewählten Videos über die Spielzeit darstellt.

4. Mobiles Endgerät nach Anspruch 3, bei dem die mehreren angezeigten Attributinformationen als Diagramme angezeigt werden einschließlich sich ändernder Icon-Information entlang zugehöriger Diagramme, die die Änderung des zugehörigen Attributs des ausgewählten Videos über die Spielzeit darstellen.

5. Mobiles Endgerät nach Anspruch 3, bei dem die mehreren angezeigten Attributinformationen für jedes Attribut individuell angezeigt werden.

6. Mobiles Endgerät nach Anspruch 3, bei dem die Steuereinheit ferner konfiguriert ist zum:
Anzeigen einer grafischen Benutzerschnittstelle mit Registerkarten für jedes zugehörige Attribut auf der Berührungsbildschirm-Anzeige,
Empfangen einer Auswahl einer bestimmten Registerkarte aus den Registerkarten, die in der angezeigten grafischen Benutzerschnittstelle enthalten sind, und
Anzeigen nur der Attributinformation für das der ausgewählten Registerkarte zugehörige Attribut auf der Berührungsbildschirm-Anzeige.

7. Mobiles Endgerät nach Anspruch 3, bei dem die Diagramme für die analysierten Attribute längs einer Zeitachse zusammen angezeigt werden und die Icon-Information für die analysierten Attribute längs individueller und getrennter Zeitachsen für jedes einzelne Attribut angezeigt wird.

8. Verfahren zum Steuern eines mobilen Endgeräts, wobei das Verfahren umfasst:
Eintreten (S410), mittels einer Steuereinheit des mobilen Endgeräts, in einen Editiermodus zum Editieren eines ausgewählten Videos,
Analysieren (S420), mittels der Steuereinheit, wie mehrere Attribute des ausgewählten Videos sich über eine Spielzeit des ausgewählten Videos verändern,
Empfangen einer Auswahl zumindest eines Attributs aus den mehreren analysierten Attributen,
Anzeigen (S420), mittels einer Berührungsbildschirm-Anzeige des mobilen Endgeräts, von Attributinformation für das ausgewählte zumindest eine Attribut auf einer der Spielzeit des ausgewählten Videos entsprechenden Zeitachse,
Empfangen (S430) einer Auswahl zumindest einer Stelle der Attributinformation entlang der Zeitachse, und
Speichern (S450), in einem dem mobilen Endgerät zugehörigen Speicher, von Editierinformation einschließlich der Attributinformation über zumindest einen der ausgewählten Stelle entsprechenden Abschnitt des Videos als Editierinformation,
wobei die Editierinformation es ermöglicht, den zumindest einen Abschnitt mittels einer Videoanwendung abspielen zu können, ohne das ausgewählte Video zu verändern.

9. Verfahren nach Anspruch 8, ferner umfassend:
Anzeigen, mittels der Berührungsbildschirm-Anzeige, mehrerer Attributinformationen längs der Zeitachse entsprechend den mehreren analysierten Attributen,
Empfangen einer Auswahl des zumindest einen Attributs aus den mehreren analysierten Attributen, und
Anzeigen, mittels der Berührungsbildschirm-Anzeige, nur der Attributinformation für das ausgewählte zumindest eine Attribut.

10. Verfahren nach Anspruch 9, bei dem die mehreren angezeigten Attributinformationen Diagramme umfassen, die die Änderung eines zugehörigen Attributs des ausgewählten Videos über die Spielzeit darstellen, und/oder Icon-Information, die die Änderung des zugehörigen Attributs des ausgewählten Videos über die Spielzeit darstellt, und/oder Farbinformation, die die Änderung des zugehörigen Attributs des ausgewählten Videos über die Spielzeit darstellt.

11. Verfahren nach Anspruch 10, bei dem die mehreren angezeigten Attributinformationen als Diagramme angezeigt werden einschließlich sich ändernder Icon-Information entlang zugehöriger Diagramme, die die Änderung des zugehörigen Attributs des ausgewählten Videos über die Spielzeit darstellen.

12. Verfahren nach Anspruch 10, bei dem die mehreren angezeigten Attributinformationen für jedes Attribut individuell angezeigt werden.

13. Verfahren nach Anspruch 10, ferner umfassend:
Anzeigen einer grafischen Benutzerschnittstelle mit Registerkarten für jedes zugehörige Attribut,
Empfangen einer Auswahl einer bestimmten Registerkarte aus den Registerkarten, die in der angezeigten grafischen Benutzerschnittstelle enthalten sind, und
Anzeigen nur der Attributinformation für das der ausgewählten Registerkarte zugehörige Attribut.

14. Verfahren nach Anspruch 10, bei dem die Diagramme für die analysierten Attribute längs einer Zeitachse zusammen angezeigt werden und die Icon-Information für die analysierten Attribute längs individueller und getrennter Zeitachsen für jedes einzelne Attribut angezeigt wird.

15. Verfahren nach Anspruch 10, ferner umfassend:
Empfangen (S430) einer Auswahl einer Icon-Information entlang der individuellen Zeitachse für ein zugehöriges Attribut, und
identifizierbares Anzeigen (S440) auf den Diagrammen eines der ausgewählten einen Icon-Information entsprechenden Abschnitts des Videos.

## Revendications

1. Terminal mobile (100), comprenant :
un contrôleur (180) configuré pour entrer dans un mode édition destiné à éditer une vidéo sélectionnée, pour analyser comment une pluralité d'attributs de la vidéo sélectionnée changent au cours d'un temps de lecture de la vidéo sélectionnée, et pour recevoir une sélection d'au moins un attribut parmi la pluralité d'attributs analysés ;
un affichage (151) à écran tactile configuré pour afficher des informations d'attribut pour le au moins un attribut sélectionné sur un axe de temps correspondant au temps de lecture de la vidéo sélectionnée ;
ledit contrôleur étant configuré pour recevoir une sélection d'au moins un point parmi les informations d'attribut le long de l'axe de temps ; et
une mémoire (160) configurée pour mémoriser les informations d'édition incluant les informations d'attribut sur au moins une section de la vidéo correspondante au point sélectionné en tant qu'informations d'édition,
dans lequel les informations d'édition permettent à la au moins une section de pouvoir être lue par une application vidéo sans modifier la vidéo sélectionnée.

2. Terminal mobile selon la revendication 1, dans lequel le contrôleur est en outre configuré pour :
afficher une pluralité d'informations d'attribut le long de l'axe de temps correspondant à la pluralité d'attributs analysés sur l'affichage à écran tactile,
recevoir une sélection du au moins un attribut parmi la pluralité d'attributs analysés, et
afficher uniquement les informations d'attribut pour le au moins un attribut sélectionné sur l'affichage à écran tactile.

3. Terminal mobile selon la revendication 2, dans lequel les informations d'attribut en pluralité affichées comprennent au moins l'un parmi des graphiques représentant le changement dans un attribut correspondant de la vidéo sélectionnée au cours du temps de lecture, des informations d'icône représentant le changement de l'attribut correspondant de la vidéo sélectionnée au cours du temps de lecture, et des informations de couleur représentant le changement de l'attribut correspondant de la vidéo sélectionnée au cours du temps de lecture.

4. Terminal mobile selon la revendication 3, dans lequel les informations d'attribut en pluralité affichées sont affichées en tant que graphiques incluant le changement des informations d'icône le long des graphiques respectifs représentant le changement des attributs correspondants de la vidéo sélectionnée au cours du temps de lecture.

5. Terminal mobile selon la revendication 3, dans lequel les informations d'attribut affichées en pluralité sont affichées individuellement pour chaque attribut.

6. Terminal mobile selon la revendication 3, dans lequel le contrôleur est en outre configuré pour :
afficher une interface utilisateur graphique incluant des onglets pour chaque attribut respectif sur l'affichage à écran tactile,
recevoir une sélection d'un onglet particulier parmi les onglets contenus dans l'interface utilisateur graphique affiché, et
afficher uniquement les informations d'attribut pour l'attribut respectif de l'onglet sélectionné sur l'affichage à écran tactile.

7. Terminal mobile selon la revendication 3, dans lequel les graphiques pour les attributs analysés sont affichés conjointement le long d'une ligne chronologique et les informations d'icône pour les attributs analysés sont affichées le long de lignes chronologiques individuelles et séparées pour chaque attribut individuel.

8. Procédé de commande d'un terminal mobile, le procédé comprenant les étapes consistant à :
entrer (S410), via un contrôleur du terminal mobile, dans un mode édition destiné à éditer une vidéo sélectionnée ;
analyser (S420), via le contrôleur, comment une pluralité d'attributs de la vidéo sélectionnée changent au cours d'un temps de lecture de la vidéo sélectionnée ;
recevoir une sélection d'au moins un attribut parmi la pluralité d'attributs analysés ;
afficher (S420), via un affichage à écran tactile du terminal mobile, des informations d'attribut pour le au moins un attribut sélectionné sur un axe de temps correspondant au temps de lecture de la vidéo sélectionnée ;
recevoir (S430) une sélection d'au moins un point parmi les informations d'attribut le long de l'axe de temps ; et
mémoriser (S450), dans une mémoire associée au le terminal mobile, des informations d'édition incluant les informations d'attribut sur au moins une section de la vidéo correspondante au point sélectionné en tant qu'informations d'édition,
dans lequel les informations d'édition permettent à la au moins une section de pouvoir être lue par une application vidéo sans modifier la vidéo sélectionnée.

9. Procédé selon la revendication 8, comprenant en outre les étapes consistant à :
afficher, via l'affichage à écran tactile, une pluralité d'informations d'attribut le long de l'axe de temps correspondant à la pluralité d'attributs analysés ;
recevoir une sélection du au moins un attribut parmi la pluralité d'attributs analysés ; et
afficher, via l'affichage à écran tactile, uniquement les informations d'attribut pour le au moins un attribut sélectionné.

10. Procédé selon la revendication 9, dans lequel les informations d'attribut en pluralité comprennent au moins l'un parmi des graphiques représentant le changement dans un attribut correspondant à la vidéo sélectionnée au cours du temps de lecture, des informations d'icône représentant le changement de l'attribut correspondant de la vidéo sélectionnée au cours du temps de lecture, et des informations de couleur représentant le changement de l'attribut correspondant de la vidéo sélectionnée au cours du temps de lecture.

11. Procédé selon la revendication 10, dans lequel les informations d'attribut affichées en pluralité sont affichées en tant que graphiques incluant un changement des informations d'icône le long des graphiques respectifs représentant le changement de l'attribut correspondant de la vidéo sélectionnée au cours du temps de lecture.

12. Procédé selon la revendication 10, dans lequel les informations d'attribut affichées en pluralité sont affichées individuellement pour chaque attribut.

13. Procédé selon la revendication 10, comprenant en outre les étapes consistant à :
afficher une interface utilisateur graphique incluant des onglets pour chaque attribut respectif ;
recevoir une sélection d'un onglet particulier parmi les onglets contenus dans l'interface utilisateur graphique affichée ; et
afficher uniquement les informations d'attribut pour l'attribut respectif de l'onglet sélectionné.

14. Procédé selon la revendication 10, dans lequel les graphiques pour les attributs analysés sont affichés conjointement le long d'une ligne chronologique et les informations d'icône pour les attributs analysés sont affichées le long de lignes chronologiques individuelles et séparées pour chaque attribut individuel.

15. Procédé selon la revendication 10, comprenant en outre les étapes consistant à :
recevoir (S430) une sélection des informations d'icône le long de la ligne chronologique individuelle pour un attribut correspondant ; et
afficher (S440) de manière identifiable sur les graphiques une section de la vidéo correspondant aux informations d'icône sélectionnées.
